# FASCICULE DE BREVET EUROPEEN

(11) **EP 3 476 581 B1**
(45) Date de publication et mention de la délivrance du brevet: **11.03.2020**
(21) Numéro de dépôt: 18202040.4
(22) Date de dépôt: 23.10.2018
(51) Int. Cl.: B29C 71/00, B29C 71/02, C08J 7/14, B29C 64/35

(54) **PROCEDE DE TRAITEMENT DE SURFACE POUR OBJETS**
VERFAHREN ZUR OBERFLÄCHENBEARBEITUNG FÜR GEGENSTÄNDE
SURFACE TREATMENT METHOD FOR OBJECTS

(30) Priorité: 24.10.2017 FR 1760026
(43) Date de publication de la demande: 01.05.2019
(73) Titulaire: Sculpteo, 94800 Villejuif (FR)
(72) Inventeur: COMTE, Myrtille, 78600 Maisons-Laffitte (FR); OULD MOHAND LEMMOUCHI, Rima, 94400 VITRY SUR SEINE (FR); MOREAU, Clément, 92140 CLAMART (FR)
(74) Mandataire: Ipside

(56) Documents cités:
- WO-A1-2011/145960
- FR-A- 772 239
- FR-A1- 3 022 250
- US-A1- 2016 082 658

## Description

### Domaine de l'invention

La présente invention concerne le domaine des procédés de traitement de surface pour objets, notamment pour objets issus de la fabrication additive, également appelée « impression 3D ».

La présente invention se rapporte plus particulièrement à un procédé physico-chimique de traitement de surface pour objets en plastique et notamment issus de techniques de fabrication additive.

Les objets concernés par cette invention contiennent au moins un polymère, par exemple un polyamide.

### Etat de la technique

La fabrication additive, également appelée impression 3D, permet de créer des objets strate par strate sans utiliser de moules. Elle est notamment employée pour la production rapide de pièces en plastique.

Les objets ainsi produits présentent une surface plus rugueuse que celle des objets obtenus par injection plastique. Dans certains cas particuliers, lors de leur mise en forme, leur surface est en contact avec des grains de poudre plastique ou de l'air plutôt qu'avec un moule lisse.

Ce rendu est dérangeant pour certaines applications : un objet peut par exemple être jugé visuellement ou tactilement peu attractif à cause de cet effet.

Plusieurs solutions existent actuellement, notamment le polissage à l'aide d'abrasifs, l'application de vernis/résine ou encore la dissolution chimique ou thermo-chimique de la surface de l'objet suivie d'une resolidification.

Actuellement, cette dernière méthode consiste à laisser l'objet au contact de vapeurs d'un solvant ou d'un mélange de solvants puis le retirer lorsque le rendu est jugé acceptable. Le duo polymère/solvant le plus répandu est l'ABS (acrylonitrile butadiène styrène) traité aux vapeurs d'acétone, mais d'autres combinaisons ont été proposées.

Un des polymères employés dans l'impression 3D, le polyamide, possède une bonne résistance chimique globale rendant difficile sa dissolution par solvant vaporisé à température ambiante. Il résiste par exemple totalement à l'acétone. Une montée en température peut favoriser le processus mais risque de poser des problèmes de sécurité dépendants de la nature des solvants employés.

Les documents FR 3 022 250 A1, FR 772 239 A et WO 2011/145960 A1 concernent des procédés de traitement de surface d'un objet.

### Exposé de l'invention

La présente invention entend remédier aux inconvénients de l'art antérieur en proposant un procédé basé sur une immersion dans une solution acide puis une montée en température pour traiter des objets contenant au moins un polymère, par exemple un polyamide, notamment mais non exclusivement des objets issus d'un procédé de fabrication additive.

A cet effet, la présente invention concerne, dans son acception la plus générale, un procédé de traitement de surface d'un objet, comportant les étapes suivantes :
- Immersion dudit objet dans une solution comportant un acide ou un mélange d'acides, et possédant un pH compris entre 0 et 6, afin d'imprégner la surface dudit objet ;
- Retrait dudit objet de ladite solution acide ;
- Chauffage dudit objet à une température comprise entre 50°C et la température de fusion de l'objet, jusqu'à l'obtention des propriétés de surface désirées en termes de brillance et de rugosité.

Le procédé selon la présente invention présente les avantages techniques suivants :
- Contrairement aux procédés de lissage classiques à base de solvant organique, ce traitement résout la problématique de la résistance chimique du polyamide : de par sa nature moléculaire, ce dernier est sensible aux acides (hydrolyse catalysée).
- La surface activée par l'acide aura une température de fusion plus basse que le cœur de l'objet, permettant ainsi de conserver la forme de l'objet durant le traitement.
- Le cycle de fusion/solidification permet à la surface de se réorganiser, gommant les creux et bosses sous l'effet de la tension de surface et résultant en un lissage de la surface.
- L'agent chimique est sous forme liquide et est appliqué sur l'objet à température ambiante, ce qui permet une certaine facilité de mise en place et réduit les risques liés à la sécurité.

Le procédé de lissage apporte :
- Une amélioration de l'état de surface en termes de rugosité, le Ra atteint des valeurs aux alentours du micromètre [0.5 ;3 µm].
- La surface matte de l'objet brut devient complètement brillante.
- Une amélioration notable sur la flexibilité du matériau.

Avantageusement, ladite solution acide possède un pH compris entre 0 et 3.

Selon un mode de réalisation, ladite solution comprend l'un des acides minéraux suivants : acide sulfurique, acide nitrique, acide phosphorique et acide chlorhydrique.

Selon un mode de réalisation, l'étape d'immersion est améliorée en appliquant un traitement thermique et/ou mécanique.

Selon une variante, le chauffage dudit objet est réalisé à une température comprise entre 120°C et la température de fusion dudit objet.

Selon un mode de réalisation, ledit procédé comporte en outre une étape d'élimination du liquide en surplus, en présence d'au moins un solvant organique ou aqueux.

Selon un mode de réalisation, l'étape d'élimination du liquide en surplus suit un procédé mécanique.

Selon un mode de réalisation, l'étape d'élimination du liquide en surplus est réalisée en appliquant une force centrifuge audit objet.

Selon un mode de réalisation, l'étape d'élimination du liquide en surplus est réalisée en appliquant un flux de gaz pressurisé.

Avantageusement, ladite étape de chauffage est mise en œuvre en utilisant un système chauffant à convection forcée.

De préférence, ledit objet subit au moins une étape de lavage en présence d'un solvant ou d'un mélange de solvants.

Avantageusement, ladite solution d'imprégnation comporte en outre des additifs déposés sur la surface de l'objet lors de ladite étape d'immersion.

Selon un mode de mise en œuvre particulier, ledit procédé est appliqué à un objet issu de techniques de fabrication additive.

Avantageusement, ledit procédé est appliqué à un objet composé d'au moins un polymère.

Selon un mode de mise en œuvre particulier, ledit procédé est appliqué à un objet en polyamide.

Avantageusement, ladite étape d'immersion est accompagnée de processus physico-mécaniques favorisant l'imprégnation.

### Brève description des dessins

On comprendra mieux l'invention à l'aide de la description, faite ci-après à titre purement explicatif, d'un mode de réalisation de l'invention, en référence aux Figures dans lesquelles :

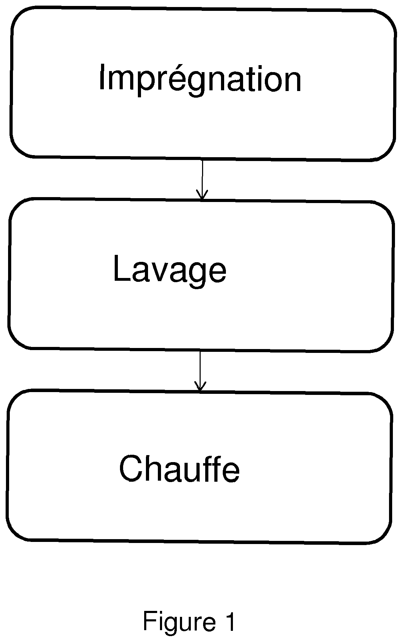

- La Figure 1 illustre les différentes étapes du procédé selon la présente invention.

### Description détaillée des modes de réalisation de l'invention

La présente invention se rapporte à un procédé de traitement de surface d'un objet, par exemple en polyamide, notamment mais non exclusivement issu de techniques de fabrication additive.

Le procédé selon la présente invention comporte les étapes suivantes :
- Immersion de l'objet dans une solution comportant un acide ou un mélange d'acides, et possédant un pH compris entre 0 et 6, afin d'imprégner la surface dudit objet ;
- Retrait de l'objet de ladite solution acide ;
- Chauffage de l'objet à une température comprise entre 50°C et la température de fusion de l'objet, jusqu'à l'obtention des propriétés de surface désirées en termes de brillance et de rugosité.

La Figure 1 illustre les différentes étapes du procédé selon la présente invention : imprégnation, séchage, chauffe et refroidissement, ces différentes étapes se rapportant à l'objet, qui, dans un mode de réalisation, est issu de techniques de fabrication additive.

Dans un mode de réalisation, ledit procédé est appliqué à un objet en polyamide.

Dans un mode de réalisation, la solution acide possède un pH compris entre 0 et 3.

Dans un mode de réalisation, l'acide est un acide minéral, et, dans un mode de réalisation, l'acide est compris dans le groupe suivant : acide sulfurique, acide nitrique, acide phosphorique et acide chlorhydrique.

Dans un mode de réalisation, le chauffage de l'objet est réalisé à une température comprise entre 120°C et la température de fusion dudit objet.

Dans un mode de réalisation, le procédé selon la présente invention comporte en outre une étape d'élimination du liquide en surplus.

Dans un mode de réalisation, l'étape d'élimination du surplus suit un procédé mécanique.

Dans un autre mode de réalisation, l'étape d'élimination du surplus est réalisée en appliquant une force centrifuge audit objet.

Dans un autre mode de réalisation, l'étape d'élimination du surplus est réalisée en appliquant un flux de gaz pressurisé.

Dans un mode de réalisation, l'étape de chauffage est mise en œuvre en utilisant un système chauffant à convection forcée, ceci assurant une meilleure homogénéité de la chauffe.

Dans un mode de réalisation, la solution d'imprégnation comporte en outre des additifs, et selon un mode de mise en œuvre, les additifs sont déposés sur la surface de l'objet lors de l'étape d'immersion, ceci conférant des propriétés additionnelles à la surface de l'objet.

Dans un mode de réalisation, ledit objet subit au moins une étape de lavage en présence d'un solvant ou d'un mélange de solvants.

La présente invention trouve une application particulière dans les objets comportant un polyamide, mais s'applique également à des objets comportant d'autres polymères, comme par exemple, le polyéthylène, le polychlorure de vinyle, les polyuréthanes, les polyesters, les polypropylènes, les polyéthylènes.

L'invention est décrite dans ce qui précède à titre d'exemple. Il est entendu que l'homme du métier est à même de réaliser différentes variantes de l'invention sans pour autant sortir du cadre du brevet qui est défini par les revendications.

## Revendications

1. Procédé de traitement de surface d'un objet, **caractérisé en ce qu'**il comporte les étapes suivantes :
• Immersion dudit objet dans une solution comportant un acide ou un mélange d'acides, et possédant un pH compris entre 0 et 6, afin d'imprégner la surface dudit objet ;
• Retrait dudit objet de ladite solution acide ;
• Chauffage dudit objet à une température comprise entre 50°C et la température de fusion dudit objet, jusqu'à l'obtention des propriétés de surface désirées en termes de brillance et de rugosité.

2. Procédé de traitement de surface d'un objet selon la revendication 1, **caractérisé en ce que** ladite solution acide possède un pH compris entre 0 et 3.

3. Procédé de traitement de surface d'un objet selon l'une des revendications 1 ou 2, **caractérisé en ce que** ladite solution comprend l'un des acides minéraux suivants : acide sulfurique, acide nitrique, acide phosphorique et acide chlorhydrique.

4. Procédé de traitement de surface d'un objet selon l'une des revendications 1, 2 ou 3, **caractérisé en ce que** l'étape d'immersion est améliorée en appliquant un traitement thermique et/ou mécanique.

5. Procédé de traitement de surface d'un objet selon l'une des revendications précédentes, **caractérisé en ce que** le chauffage dudit objet est réalisé à une température comprise entre 120°C et la température de fusion dudit objet.

6. Procédé de traitement de surface d'un objet selon l'une des revendications précédentes, **caractérisé en ce qu'**il comporte en outre une étape d'élimination du liquide en surplus, en présence d'au moins un solvant organique ou aqueux.

7. Procédé de traitement de surface d'un objet selon la revendication 6, **caractérisé en ce que** l'étape d'élimination du liquide en surplus suit un procédé mécanique.

8. Procédé de traitement de surface d'un objet selon la revendication 6 ou 7, **caractérisé en ce que** l'étape d'élimination du liquide en surplus est réalisée en appliquant une force centrifuge audit objet.

9. Procédé de traitement de surface d'un objet selon la revendication 6, 7 ou 8, **caractérisé en ce que** l'étape d'élimination du liquide en surplus est réalisée en appliquant un flux de gaz pressurisé.

10. Procédé de traitement de surface d'un objet selon l'une des revendications précédentes, **caractérisé en ce que** ladite étape de chauffage est mise en œuvre en utilisant un système chauffant à convection forcée.

11. Procédé de traitement de surface d'un objet selon l'une des revendications précédentes, **caractérisé en ce que** ledit objet subit au moins une étape de lavage en présence d'un solvant ou d'un mélange de solvants.

12. Procédé de traitement de surface d'un objet selon l'une des revendications précédentes, **caractérisé en ce que** ladite solution d'imprégnation comporte en outre des additifs déposés sur la surface de l'objet lors de ladite étape d'immersion.

13. Procédé de traitement de surface d'un objet selon l'une des revendications précédentes, **caractérisé en ce qu'**il est appliqué à un objet issu de techniques de fabrication additive.

14. Procédé de traitement de surface d'un objet selon l'une des revendications précédentes, **caractérisé en ce qu'**il est appliqué à un objet comportant au moins un polymère.

15. Procédé de traitement de surface d'un objet selon la revendication 14, **caractérisé en ce qu'**il est appliqué à un objet en polyamide.

16. Procédé de traitement de surface d'un objet selon l'une des revendications précédentes, **caractérisé en ce que** ladite étape d'immersion est accompagnée de processus physico-mécaniques favorisant l'imprégnation.

## Patentansprüche

1. Verfahren zur Oberflächenbehandlung eines Objekts, **dadurch gekennzeichnet, dass** es die folgenden Schritte umfasst:
- Tauchen des Objekts in eine Lösung, die eine Säure oder eine Mischung von Säuren umfasst und einen pH-Wert im Bereich zwischen 0 und 6 besitzt, um die Oberfläche des Objekts zu imprägnieren;
- Herausnehmen des Objekts aus der Säurelösung;
- Erhitzen des Objekts auf eine Temperatur im Bereich zwischen 50 °C und der Schmelztemperatur des Objekts bis zum Erhalt der im Hinblick auf Glanz und Rauheit gewünschten Oberflächeneigenschaften.

2. Verfahren zur Oberflächenbehandlung eines Objekts nach Anspruch 1, **dadurch gekennzeichnet, dass** die Säurelösung einen pH-Wert im Bereich zwischen 0 und 3 besitzt.

3. Verfahren zur Oberflächenbehandlung eines Objekts nach einem der Ansprüche 1 oder 2, **dadurch gekennzeichnet, dass** die Lösung eine der folgenden Mineralsäuren umfasst: Schwefelsäure, Salpetersäure, Phosphorsäure und Salzsäure.

4. Verfahren zur Oberflächenbehandlung eines Objekts nach einem der Ansprüche 1, 2 oder 3, **dadurch gekennzeichnet, dass** der Tauchschritt durch Anwenden einer thermischen und/oder mechanischen Behandlung verbessert wird.

5. Verfahren zur Oberflächenbehandlung eines Objekts nach einem der vorstehenden Ansprüche, **dadurch gekennzeichnet, dass** das Erhitzen des Objekts auf eine Temperatur im Bereich zwischen 120 °C und der Schmelztemperatur des Objekts ausgeführt wird.

6. Verfahren zur Oberflächenbehandlung eines Objekts nach einem der vorstehenden Ansprüche, **dadurch gekennzeichnet, dass** es weiter einen Schritt des Entfernens der überschüssigen Flüssigkeit in Gegenwart mindestens eines organischen oder wässrigen Lösungsmittels umfasst.

7. Verfahren zur Oberflächenbehandlung eines Objekts nach Anspruch 6, **dadurch gekennzeichnet, dass** der Schritt des Entfernens der überschüssigen Flüssigkeit einem mechanischen Verfahren folgt.

8. Verfahren zur Oberflächenbehandlung eines Objekts nach Anspruch 6 oder 7, **dadurch gekennzeichnet, dass** der Schritt des Entfernens der überschüssigen Flüssigkeit durch Aufbringen einer Zentrifugalkraft auf das Objekt ausgeführt wird.

9. Verfahren zur Oberflächenbehandlung eines Objekts nach Anspruch 6, 7 oder 8, **dadurch gekennzeichnet, dass** der Schritt des Entfernens der überschüssigen Flüssigkeit durch Aufbringen eines Druckgasstroms ausgeführt wird.

10. Verfahren zur Oberflächenbehandlung eines Objekts nach einem der vorstehenden Ansprüche, **dadurch gekennzeichnet, dass** der Schritt des Erhitzens unter Verwendung eines Heizsystems mit Zwangskonvektion umgesetzt wird.

11. Verfahren zur Oberflächenbehandlung eines Objekts nach einem der vorstehenden Ansprüche, **dadurch gekennzeichnet, dass** das Objekt mindestens einem Schritt des Waschens in Gegenwart eines Lösungsmittels oder einer Mischung von Lösungsmitteln unterzogen wird.

12. Verfahren zur Oberflächenbehandlung eines Objekts nach einem der vorstehenden Ansprüche, **dadurch gekennzeichnet, dass** die Imprägnierlösung weiter Additive umfasst, die beim Tauchschnitt auf der Oberfläche des Objekts abgeschieden werden.

13. Verfahren zur Oberflächenbehandlung eines Objekts nach einem der vorstehenden Ansprüche, **dadurch gekennzeichnet, dass** es auf ein Objekt angewandt wird, der aus additiven Fertigungstechniken hervorgegangen ist.

14. Verfahren zur Oberflächenbehandlung eines Objekts nach einem der vorstehenden Ansprüche, **dadurch gekennzeichnet, dass** es auf ein Objekt angewandt wird, das mindestens ein Polymer umfasst.

15. Verfahren zur Oberflächenbehandlung eines Objekts nach Anspruch 14, **dadurch gekennzeichnet, dass** es auf ein Objekt aus Polyamid angewandt wird.

16. Verfahren zur Oberflächenbehandlung eines Objekts nach einem der vorstehenden Ansprüche, **dadurch gekennzeichnet, dass** der Tauchschritt von physikalisch-mechanischen Prozessen begleitet wird, die die Imprägnierung begünstigen.

## Claims

1. Method for surface treating an object, **characterised in that** it comprises the following steps:
- Immersion of said object in a solution comprising an acid or a mixture of acids, and having a pH of between 0 and 6, in order to impregnate the surface of said object;
- Removal of said object from said acid solution;
- Heating of said object at a temperature of between 50°C and the melting temperature of said object, until desired surface properties in terms of shine and roughness are obtained.

2. Method for surface treating an object according to claim 1, **characterised in that** said acid solution has a pH of between 0 and 3.

3. Method for surface treating an object according to one of claims 1 or 2, **characterised in that** said solution comprises one of the following mineral acids: sulphuric acid, nitric acid, phosphoric acid and hydrochloric acid.

4. Method for surface treating an object according to one of claims 1, 2 or 3, **characterised in that** the immersion step is improved by applying a thermal and/or mechanical treatment.

5. Method for surface treating an object according to one of the preceding claims, **characterised in that** the heating of said object is carried out at a temperature of between 120°C and the melting temperature of said object.

6. Method for surface treating an object according to one of the preceding claims, **characterised in that** it further comprises a step of removing excess liquid, in the presence of at least one organic or aqueous solvent.

7. Method for surface treating an object according to claim 6, **characterised in that** the step of removing excess liquid follows a mechanical method.

8. Method for surface treating an object according to claim 6 or 7, **characterised in that** the step of removing excess liquid is carried out by applying a centrifugal force to said object.

9. Method for surface treating an object according to claim 6, 7 or 8, **characterised in that** the step of removing excess liquid is carried out by applying a pressurised gas flow.

10. Method for surface treating an object according to one of the preceding claims, **characterised in that** said heating step is implemented by using a forced convection heating system.

11. Method for surface treating an object according to one of the preceding claims, **characterised in that** said object undergoes at least one washing step in the presence of a solvent or a mixture of solvents.

12. Method for surface treating an object according to one of the preceding claims, **characterised in that** said impregnation solution further comprises additives deposited on the surface of the object during said immersion step.

13. Method for surface treating an object according to one of the preceding claims, **characterised in that** it is applied to an object coming from additive manufacturing techniques.

14. Method for surface treating an object according to one of the preceding claims, **characterised in that** it is applied to an object comprising at least one polymer.

15. Method for surface treating an object according to claim 14, **characterised in that** it is applied to a polyamide object.

16. Method for surface treating an object according to one of the preceding claims, **characterised in that** said immersion step is accompanied by physico-mechanical processes favouring impregnation.
